(19) Europäisches Patentamt
European Patent Office
Office européen des brevets

(11) **EP 2 613 989 B1**

(12) **EUROPÄISCHE PATENTSCHRIFT**

(45) Veröffentlichungstag und Bekanntmachung des Hinweises auf die Patenterteilung:
**29.04.2015 Patentblatt 2015/18**

(21) Anmeldenummer: **11731374.2**

(22) Anmeldetag: **14.07.2011**

(51) Int Cl.:
*B60T 13/58* (2006.01)     *B60T 13/74* (2006.01)
*B60T 17/22* (2006.01)

(86) Internationale Anmeldenummer:
**PCT/EP2011/062035**

(87) Internationale Veröffentlichungsnummer:
**WO 2012/031804 (15.03.2012 Gazette 2012/11)**

(54) **VERFAHREN, REGEL- BZW. STEUERGERÄT, UND FESTSTELLBREMSE MIT SO EINEM REGEL- BZW. STEUERGERÄT, ZUM EINSTELLEN DER VON EINER FESTSTELLBREMSE AUSGEÜBTEN KLEMMKRAFT,**

METHOD, CONTROL DEVICE, AND PARKING BRAKE WITH SUCH A CONTROL DEVICE, FOR ADJUSTING THE CLAMP FORCE OF A PARKING BRAKE

PROCEDE, DISPOSITIF DE COMMANDE ET FREIN DE STATIONNEMENT AVEC UN TEL DISPOSITIF DE COMMANDE POUR AJUSTER LA FORCE DE SERRAGEDANS UN FREIN DE STATIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2010 DE 102010040565**

(43) Veröffentlichungstag der Anmeldung:
**17.07.2013 Patentblatt 2013/29**

(73) Patentinhaber: **Robert Bosch GmbH**
**70442 Stuttgart (DE)**

(72) Erfinder:
• **BAEHRLE-MILLER, Frank**
**71101 Schoenaich (DE)**
• **PUTZER, Tobias**
**74177 Bad Friedrichshall (DE)**

(56) Entgegenhaltungen:
**DE-A1-102006 011 546     GB-A- 2 349 675**

**Beschreibung**

Die Erfindung bezieht sich auf ein Verfahren zum Einstellen der von einer Feststellbremse ausgeübten Klemmkraft in einem Fahrzeug.

Stand der Technik

Mithilfe von automatischen Feststell- bzw. Parkbremsen werden Fahrzeuge im Stillstand durch Erzeugen einer dauerhaften Bremskraft festgesetzt. Aus dem Stand der Technik sind Parkbremsen mit einem Elektromotor bekannt, dessen Stellbewegung über ein Getriebe wie zum Beispiel ein Spindelantrieb direkt auf die Bremskolben an den Radbremsen wirkt. Die Elektromotoren sind üblicherweise so dimensioniert, dass ein Fahrzeug auf Steigungen von mindestens 20 % energielos gehalten werden kann. Bei kleiner dimensionierten Elektromotoren oder größeren Steigungen wird zusätzlich eine hydraulische Bremsvorrichtung betätigt, um die Klemmkraft bis auf den erforderlichen Wert zum Festsetzen des Fahrzeugs zu erhöhen.

DE10 2006 011 546 A1 beschreibt eine Bremshaltefunktion wobei mittels eines ersten Bremssystems durch Aufbau eines hydraulischen oder pneumatischen Drucks eine erste Bremskraft erzeugt wird, und bei mittels eines zeiten Bremssystems, während des Vorliegens des ersten Bremskraft, eine zusätzliche zweite Bremskraft aufgebracht wird, und nach Durchführung des zweiten Anpressens der hydraulische oder pneumatische Druck abgebaut wird.

Offenbarung der Erfindung

Der Erfindung liegt die Aufgabe zugrunde, die Klemmkraft in einer Feststellbremse in einem Fahrzeug in ökonomischer Weise bereitzustellen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren betrifft das Einstellen der von einer Feststellbremse ausgeübten Klemmkraft in einem Fahrzeug, wobei die Feststellbremse zum einen eine elektromotorische Bremsvorrichtung, welche einen elektrischen Bremsmotor umfasst, und zum andern eine Zusatzbremsvorrichtung aufweist. Über beide Bremsvorrichtungen kann ein einstellbarer Anteil an der Gesamtklemmkraft zum Festsetzen des Fahrzeuges veränderlich zwischen null und einem Maximalwert eingestellt werden. Die Klemmkraft wird bevorzugt über den elektrischen Bremsmotor aufgebracht, wobei die Zusatzbremsvorrichtung, bei der es sich insbesondere um eine hydraulische Bremsvorrichtung handelt, ergänzend für den Fall in Kraft tritt, dass die Klemmkraft in der geforderten Höhe nicht allein über den elektrischen Bremsmotor bereitgestellt werden kann.

Bei der Bereitstellung der Klemmkraft über den elektrischen Bremsmotor muss berücksichtigt werden, dass die Motorleistung sich durch Alterung oder Witterungseinflüsse, insbesondere eine Temperaturabhängigkeit der elektrischen Widerstände ändern kann, außerdem können aufgrund von Serienstreuung signifikante Unterschiede in der Motorleistung auftreten. Sofern sich aufgrund einer beispielsweise alterungsbedingten Änderung die maximal über den elektrischen Bremsmotor bereitzustellende Klemmkraft reduziert hat, muss über die Zusatzbremsvorrichtung eine ergänzende Klemmkraft erzeugt werden, wofür sich jedoch der Zeitbedarf bis zum Erreichen der Gesamtklemmkraft erhöhen kann. Soweit beispielsweise aufgrund einer Serienstreuung über einen aktuell verbauten Bremsmotor eine den Normwert übersteigende Klemmkraft bereitgestellt werden kann, muss andererseits die Zusatzbremsvorrichtung erst bei einer höheren geforderten Klemmkraft in Kraft treten als dies in Standardfällen der Fall ist, bei denen über den Bremsmotor nur die Norm-Klemmkraft erreicht.

Um auf derartige, unterschiedliche Situationen bedarfsgerecht und in kurzer Zeit reagieren zu können, kann gemäß der Erfindung die aktuell über den elektrischen Bremsmotor erzeugbare maximale Klemmkraft mit erhöhter Genauigkeit ermittelt werden. Hierzu wird zunächst ein Gesamtwiderstand in der elektromotorischen Bremsvorrichtung aus der Summe des Motor-Ersatzwiderstands und eines Steuergerät-Ersatzwiderstands ermittelt, wobei Letzterer den Widerstand in den Stromversorgungs- und Steuereinheiten des Bremsmotors bezeichnet. Der Steuergerät-Ersatzwiderstand wird über Zustands- bzw. Betriebsgrößen oder sonstige Kenngrößen der Bremsvorrichtung ermittelt, insbesondere aus gemessenen Größen wie zum Beispiel aus einer Strom- und Spannungsmessung.

In einem weiteren Schritt wird der so berechnete Gesamtwiderstand der Ermittlung der maximal erzeugbaren Klemmkraft und/oder der Ermittlung des für eine Zielklemmkraft erforderlichen Motorstroms zugrunde gelegt. Es steht somit für die aktuelle Situation die maximal erzeugbare Klemmkraft, welche über den elektrischen Bremsmotor generiert werden kann, bzw. der für eine Zielklemmkraft erforderliche Motorstrom als Information zur Verfügung. Hierbei werden alle kurzfristigen und langfristigen Einflüsse auf den elektrischen Bremsmotor, die sich auf die Bremsmotorleistung auswirken, erfasst, also beispielsweise Temperatureinflüsse, Alterungen, Serienstreuungen etc.

Für den Fall, dass die maximal erzeugbare Klemmkraft einen zugeordneten Schwellenwert unterschreitet, wird über die Zusatzbremsvorrichtung eine Zusatzbremskraft aufgebracht. Gleiches gilt für die Situation, dass der für die Zielklemmkraft erforderliche Motorstrom einen zugeordneten Schwellenwert überschreitet; auch in diesem Fall wird über die Zusatzbremsvorrichtung eine Zusatzbremskraft erzeugt.

Aufgrund der genaueren Kenntnis der maximal erzeugbaren Klemmkraft bzw. des für die Zielklemmkraft erforderlichen Motorstroms kann im Vergleich zum Stand der Technik schneller reagiert und bedarfsweise die Zusatzbremsvorrichtung aktiviert werden, so dass der gesamte Vorgang zum Bereitstellen der erforderlichen Klemmkraft in der Feststellbremse in kürzerer Zeit durchgeführt wird. Des Weiteren ist eine präzisere Ansteuerung möglich, so dass eine Energie sparendere Betriebsweise gegeben ist. Für den Fall, dass über den elektrischen Bremsmotor eine über Normwerte hinausgehende Klemmkraft bereitgestellt werden kann, genügt es, über die Zusatzbremsvorrichtung eine entsprechend geringere, ergänzende Klemmkraft zu erzeugen. Insgesamt wird durch das erfindungsgemäße Verfahren die Geräuschemission aufgrund der bedarfsgerechten Zuschaltung der Zusatzbremsvorrichtung reduziert, außerdem ist die Komponentenbelastung für die Zusatzbremsvorrichtung sowie die Bordnetzbelastung aufgrund der geringen Anzahl der Applikationen mit Unterstützung durch die Zusatzbremsvorrichtung herabgesetzt. Einflüsse auf die über den elektrischen Bremsmotor bereitzustellende Klemmkraft, die auf Temperatur, Motoralterung, Chargenstreuung und Schwankungen in der Spannungsbereitstellung zurückgehen, werden reduziert bzw. kompensiert.

Gemäß einer weiteren zweckmäßigen Ausführung wird die Strom- und Spannungsmessung zur Ermittlung des Steuergerät-Ersatzwiderstands zwischen dem Bremsmotor und den mit dem Bremsmotor elektrisch verbundenen Stromversorgungs- und Steuereinheiten durchgeführt. Die Stromversorgungs- und Steuereinheiten umfassen zweckmäßigerweise ein Steuergerät einschließlich einer Leistungselektronik zur Ansteuerung des elektrischen Bremsmotors sowie eine Batterie zur Stromversorgung einschließlich der verbindenden Stromleitungen. Die Strom- und Spannungsmessung erfolgt an der Ausgangsseite des Steuergeräts.

Die Messung wird vorzugsweise innerhalb eines definierten Strombereichs durchgeführt, der durch einen oberen und einen unteren Schwellenwert markiert wird. Die Schwellenwerte werden vorteilhafterweise so gesetzt, dass der Strom innerhalb des von den Schwellenwerten markierten Bereiches einen zumindest annähernd geradlinigen Verlauf aufweist. Beispielsweise wird der untere Schwellenwert auf 4A und der obere Schwellenwert auf 8A gesetzt. An diesen Stromschwellenwerten werden die zugehörigen Spannungswerte gemessen, wobei der Steuergerät-Ersatzwiderstand aus dem Verhältnis von Spannungsdifferenz zu Stromdifferenz an den betrachteten Messpunkten berechnet wird.

Bei Kenntnis des Steuergerät-Ersatzwiderstands sowie des Motor-Ersatzwiderstands, welcher den Innenwiderstand des Motors und die Leitungswiderstände innerhalb des Motors umfasst, kann ein Gesamtwiderstand aus der Summe der einzelnen Ersatzwiderstände gebildet werden, aus dem unter Berücksichtigung der Leerlaufspannung der maximal mögliche Motorstrom berechnet werden kann. Die Leerlaufspannung wird insbesondere ebenfalls durch Messung ermittelt. Mit der Kenntnis des Maximalstroms kann das maximale Motormoment berechnet werden, welches der elektrische Bremsmotor abgeben kann. Unter weiterer Berücksichtigung von Getriebeuntersetzungen sowie Wirkungsgraden lässt sich daraus die maximal erzielbare Klemmkraft ermitteln. Des Weiteren kann für eine gegebene Zielklemmkraft der hierfür benötigte Motorstrom berechnet werden. Durch den vorbeschriebenen Vergleich mit zugeordneten Schwellenwerten wird festgestellt, ob die Zielklemmkraft allein über eine Betätigung des elektrischen Bremsmotors bereitgestellt werden kann oder die Zusatzbremsvorrichtung zugeschaltet werden muss.

Gemäß weiterer zweckmäßiger Ausführung ist vorgesehen, dass die Strom- und Spannungsmessung zur Ermittlung des Steuergerät-Ersatzwiderstands während des Einschaltvorgangs durchgeführt wird. Unmittelbar nach dem Einschalten steigt der Stromverlauf auf ein Maximum an und fällt anschließend asymptotisch ab, wobei die Strom- und Spannungsmessung innerhalb des vom Maximum abfallenden Zweigs des Stromverlaufs in einen annähernd linearen Bereich gelegt wird. Es werden ein oberer und ein unterer Strom-Schwellenwert vorgegeben, dessen Erreichen gemessen werden kann, ebenso die dazugehörigen Spannungswerte.

Das erfindungsgemäße Verfahren läuft in einem Regel- bzw. Steuergerät ab, das im Fahrzeug vorhanden ist. Es kann sich bei dem Regel- bzw. Steuergerät um das ESP-Steuergerät (elektronisches Stabilitätsprogramm) handeln.

Das Regel- bzw. Steuergerät ist der Feststellbremse in dem Fahrzeug zugeordnet. Bei der Zusatzbremsvorrichtung handelt es sich vorzugsweise um eine hydraulische Bremsvorrichtung, insbesondere um die hydraulischen Radbremsen, welche auch bei einem regulären Bremsvorgang betätigt werden. Der elektrische Bremsmotor wirkt auf den Bremskolben der hydraulischen Bremsanlage, die die Zusatzbremsvorrichtung für die Feststellbremse bildet.

Weitere Vorteile und zweckmäßige Ausführungen sind den weiteren Ansprüchen, der Figurenbeschreibung und den Zeichnungen zu entnehmen. Es zeigen:

Fig. 1     eine schematische Darstellung eines elektrischen Bremsmotors als Bestandteil einer Feststellbremse in einem Fahrzeug einschließlich eines Steuergerätes sowie der Stromversorgung über eine Batterie,

Fig. 2     ein Schaubild mit dem zeitabhängigen Strom- und Spannungsverlauf zu Beginn des Betätigens des elektrischen Bremsmotors,

Fig. 3     ein Ablaufschema mit den Verfahrensschritten zum Ermitteln der maximal erreichbaren Klemmkraft über den elektrischen Bremsmotor bzw. des erforderlichen Motorstroms für eine gegebene Zielklemmkraft.

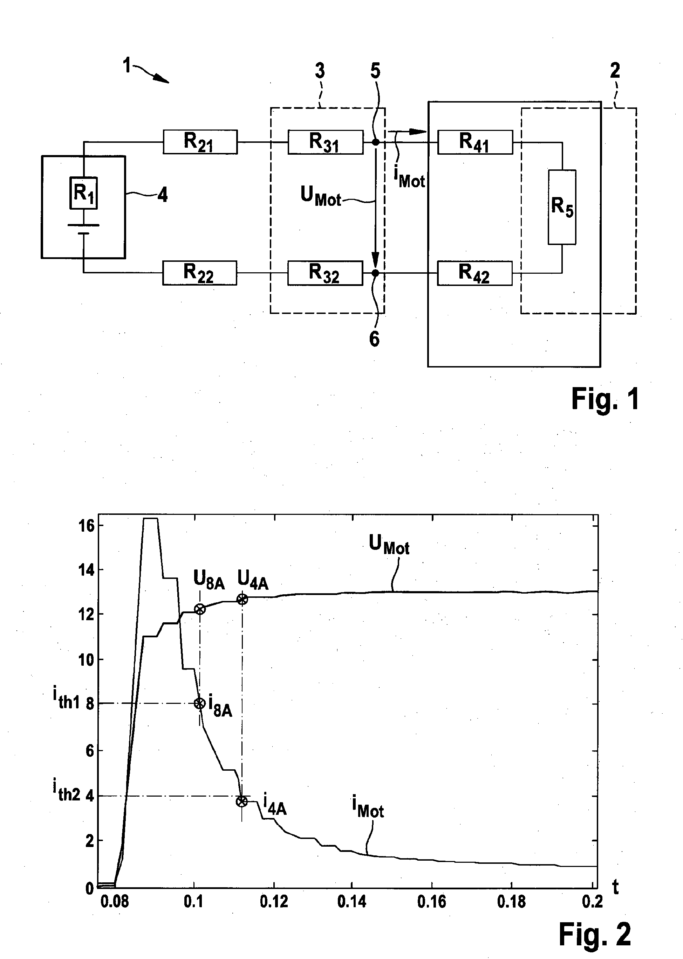

In Fig. 1 ist schematisch eine Feststellbremse 1 für ein Fahrzeug mit einem elektrischen Bremsmotor 2 dargestellt, bei dessen Betätigung eine Bremskraft auf den Bremskolben einer hydraulischen Bremsvorrichtung, welche die Radbremse bildet, ausgeübt wird. Der elektrische Bremsmotor sitzt direkt auf dem Bremssattel der Radbremse. Über ein Getriebe wie zum Beispiel ein Spindelantrieb wird die Kraft des elektrischen Bremsmotors auf den betreffenden Bremskolben übertragen. Der elektrische Bremsmotor ist zusammen mit dem Untersetzungsgetriebe so dimensioniert, dass ohne Betätigung der hydraulischen Bremsvorrichtung das Fahrzeug bei einer Steigung von mindestens 20 % allein über den elektrischen Bremsmotor gehalten werden kann.

Dem elektrischen Bremsmotor 2 ist ein Steuergerät 3 zugeordnet, welches eine Leistungselektronik enthält, über die der Bremsmotor 2 mit Strom versorgt wird. Das Steuergerät 3 kann Bestandteil eines ESP-Steuergerätes sein bzw. sich auf einem derartigen Steuergerät als Erweiterung befinden. Desweiteren ist es auch möglich, dass das Steuergerät als separate Einheit ausgeführt ist und über eine Schnittstelle mit dem ESP-Steuergerät kommuniziert.

Dem Steuergerät 3 ist eine Batterie 4 zugeordnet, die über Stromleitungen mit dem Steuergerät 3 verbunden ist. Die Batterie 4 weist einen elektrischen Innenwiderstand $R_1$ auf, die verbindenden Stromleitungen einen Widerstand $R_{21}$ bzw. $R_{22}$. Der Innenwiderstand des Steuergerätes 3 ist über die Widerstände $R_{31}$ und $R_{32}$ gekennzeichnet.

Sämtliche Widerstände der Batterie 4, des Steuergerätes 3 sowie der verbindenden Stromleitungen zwischen Batterie und Steuergerät können additiv zu einem Steuergerät-Ersatzwiderstand $R_{EZ}$ zusammengefasst werden.

Der elektrische Bremsmotor 2 weist einen elektrischen Innenwiderstand $R_5$ auf Stromleitungen, welche den Bremsmotor 2 mit Strom versorgen, sind mit elektrischen Widerständen $R_{41}$ und $R_{42}$ gekennzeichnet. Diese Stromleitungen sind dem Bremsmotor 2 zugeordnet. Der Widerstand $R_{41}$ und $R_{42}$ der Stromleitungen sowie der Innenwiderstand $R_5$ bilden insgesamt additiv den Motor-Ersatzwiderstand $R_{est}$. Der Gesamtwiderstand $R_{ges}$ setzt sich zusammen aus der Summe des Steuergerät-Ersatzwiderstandes $R_{EZ}$ und des Motor-Ersatzwiderstandes $R_{est}$:

$$R_{ges} = R_{EZ} + R_{est}$$

Der Steuergerät-Ersatzwiderstand $R_{EZ}$ wird durch Messen von Stromwerten $i_{4A}$, $i_{8A}$ und zugehörigen Spannungswerten $U_{4A}$, $U_{8A}$ ermittelt. Die Messung erfolgt an der Ausgangsseite des Steuergerätes 3 zwischen Messpunkten 5 und 6, zwischen denen die Motorspannung $U_{Mot}$ anliegt und von denen aus der Strom $i_{Mot}$ in den elektrischen Bremsmotor 2 fließt. Wie Fig. 1 in Verbindung mit Fig. 2 zu entnehmen, werden ein oberer Strom-Schwellenwert $i_{th1}$ und ein unterer Strom-Schwellenwert $i_{it2}$ vorgegeben, an denen die Messung erfolgt. Die Messung wird während des Einschaltvorgangs durchgeführt, bei dem der Stromverlauf des Motorstroms $i_{Mot}$ zunächst auf einem Maximum ansteigt und anschließend wieder steil abfällt. Die Schwellenwerte $i_{th1}$ und $i_{th2}$ befinden sich im abfallenden Zweig der Stromverlaufskurve in einem zumindest annähernd geradlinigen Abschnitt. Der Beginn der Messung erfolgt mit Erreichen des oberen Schwellenwertes $i_{th1}$, der zugeordnete Messwert ist mit $i_{8A}$ bezeichnet. Zugleich wird der Spannungswert $U_{8A}$ ermittelt.

Im weiteren Verlauf sinkt der Stromverlauf bis unter den unteren Strom-Schwellenwert $i_{th2}$ ab, der zugeordnete Strom-Messwert ist mit $i_{4A}$ bezeichnet. Diesem ist der Spannungs-Messwert $U_{4A}$ zugeordnet.

Die Strom-Messwerte $i_{8A}$ und $i_{4A}$ liegen bei zumindest annähernd 8A bzw. 4A und können, wie insbesondere dem Stromwert $i_{4A}$ zu entnehmen, geringfügig von den zugeordneten Schwellenwerten $i_{th1}$ bzw. $i_{th2}$ abweichen. Es ist insbesondere möglich, dass die zugeordneten Strom-Messwerte geringfügig unterhalb der Schwellenwerte liegen. Die angeführten Strom-Schwellewerte sind nur beispielhaft aufgeführt. Diese variieren in Abhängigkeit der tatsächlichen Leitungswiderstände bzw. des verwendeten Motors, wobei die Leitungswiderstände und die Motorauslegung systemrelevant sind. Damit werden die tatsächlichen Schwellenwerte für jedes System gegebenenfalls neu berechnet und angepasst.

Zur Ermittlung des Steuergerät-Ersatzwiderstandes $R_{EZ}$ wird das Verhältnis aus den Differenzen der Spannungswerte und der Stromwerte gemäß

$$R_{EZ} = \frac{U_{4A} - U_{8A}}{i_{8A} - i_{4A}} = \frac{U_{St,m}}{i_{St,m}}$$

gebildet.

Die Spannungsdifferenz ist mit $U_{st,m}$, die Stromdifferenz mit $i_{st,m}$ bezeichnet.

Damit liegt der Steuergerät-Ersatzwiderstand $R_{EZ}$ vor und bei Kenntnis des Motor-Ersatzwiderstandes $R_{est}$ kann der Gesamtwiderstand $R_{ges}$ aus der Summe beider Widerstände gebildet werden.

Bei Kenntnis der Leerlaufspannung $U_{idle}$, welche ebenfalls durch Messung bestimmt wird, kann aus dem Verhältnis der Leerlaufspannung zum Gesamtwiderstand gemäß

$$i_{Mot,\max} = \frac{U_{idle}}{R_{ges}}$$

der maximal mögliche Motorstrom $I_{Mot,max}$ berechnet werden. Aus dem Maximalstrom $i_{Mot,max}$ des Bremsmotors kann unter Berücksichtigung der Motorkonstante $K_M$, eines Lastadaptionsfaktors a sowie des Leerlaufstroms $i_{idle}$, welcher ebenfalls durch Messung ermittelt wird, gemäß

$$M_{Mot,\max} = K_M(i_{Mot,\max} \cdot a - i_{idle})$$

das maximale Motormoment $M_{Mot,max}$, welches der Bremsmotor zur Verfügung stellen kann, bereits in bzw. unmittelbar nach der Leerlaufphase ermittelt werden. Der Lastadaptionsfaktor a dient zur Anpassung der Motorkonstante für Motorströme > 30 % bis 70 % des Blockierstromes und befindet sich typischerweise in einem Wertebereich zwischen 0.8 und 0.98.

Das abgegebene Motormoment wird durch das Untersetzungsgetriebe übertragen, wobei das abgegebene Getriebemoment unter Berücksichtigung der Getriebeuntersetzung $ü_{Getr}$ und des Getriebewirkungsgrades $\eta_{Getr}$ gemäß

$$M_{Getr} = \frac{M_{Mot} \cdot \eta_{Getr}}{ü_{Getr}}$$

berechnet wird.

Das vom Getriebe abgegebene Moment wird durch die Spindel in eine axiale Klemmkraft $F_N$ gemäß

$$F_N = \frac{2\pi \cdot M_{Getr} \cdot \eta_{Sp}}{S_{Sp}}$$

transformiert. Die Klemmkraft $F_N$ dient zum Zuspannen der Feststell- bzw. Parkbremse. Bei der Berechnung der Klemmkraft $F_N$ wird die Gewindesteigung $S_{Sp}$ der Spindel sowie der Spindelwirkungsgrad $\eta_{Sp}$ berücksichtigt.

Mit den vorstehenden Informationen kann gemäß

$$F_{N,\max} = \frac{2\pi \cdot K_M(i_{Mot,\max} \cdot a - i_{idle}) \cdot \eta_{Getr} \cdot \eta_{Sp}}{ü_{Getr} \cdot s_{Sp}}$$

die maximale Klemmkraft $F_{N,max}$ berechnet werden, die allein über eine Betätigung des elektrischen Bremsmotors erreicht werden kann.

Bei einer gegebenen Zielklemmkraft $F_{N,Ziel}$ kann alternativ oder zusätzlich auch der Motorstrom $i_{Mot,Ziel}$ gemäß

$$i_{Mot,Ziel} = \frac{1}{a}\left[\frac{F_{N,Ziel} \cdot ü_{Getr} \cdot s_{Sp}}{2\pi \cdot K_M \cdot \eta_{Getr} \cdot \eta_{Sp}}\right]$$

berechnet werden, welcher erforderlich ist, um in dem Bremsmotor die Zielklemmkraft $F_{N,Ziel}$ bereitzustellen.

Bei Kenntnis der maximalen Klemmkraft $F_{N,max}$ und/oder des Motorstroms $i_{mot,Ziel}$ kann über einen Vergleich mit zugeordneten Schwellenwerten entschieden werden, ob eine zusätzliche Betätigung der hydraulischen Bremsvorrichtung als Ergänzung zum elektrischen Bremsmotor zum Einstellen der geforderten Klemmkraft notwendig ist. Sofern die maximale Klemmkraft $F_{N,max}$ die Zielklemmkraft nicht erreicht, muss die hydraulische Bremsvorrichtung zugeschaltet werden. Gleiches gilt für den Fall, dass der für eine gegebene Zielklemmkraft $F_{N,Ziel}$ erforderliche Motorstrom $i_{Mot,Ziel}$

höher liegt als ein maximal möglicher Stromwert.

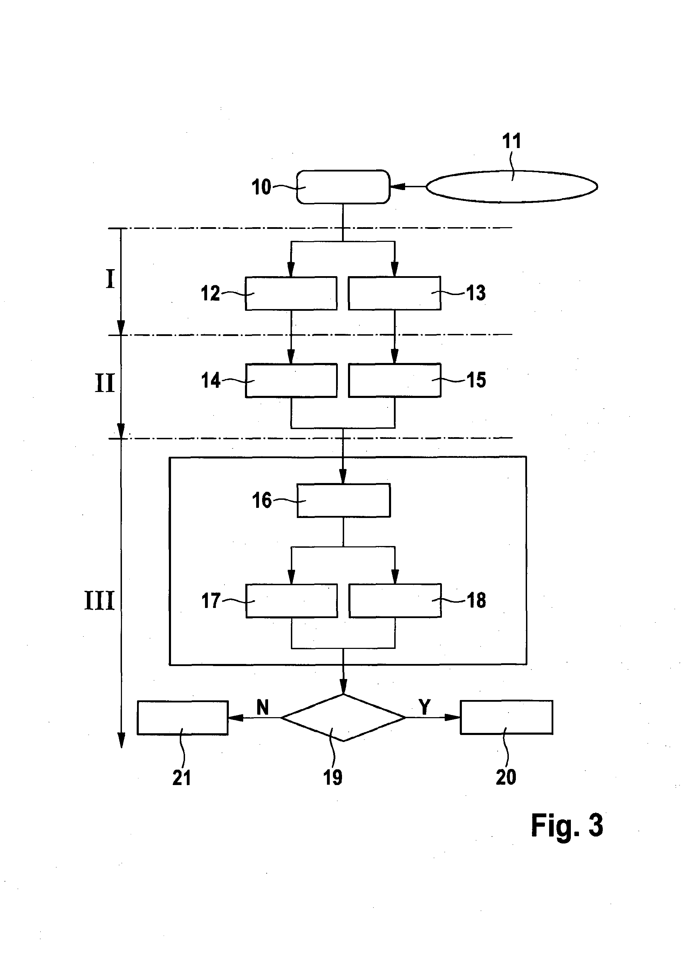

In Fig. 3 ist der Ablauf des Verfahrens in einem Ablaufschema dargestellt. Der Verfahrensschritt 10 markiert den Start des Zuspann- bzw. des Festsetzvorgangs bei Betätigung der Feststellbremse. Mit dem Start des Vorganges wird gemäß Verfahrensschritt 11 eine Zielklemmkraft $F_{N,Ziel}$ ermittelt, wofür insbesondere die Steigung, auf der das Fahrzeug aktuell steht, berücksichtigt wird. Bei Steigungen bis 20 % kann in der Regel die Klemmkraft allein über den elektrischen Bremsmotor der Feststellbremse bereitgestellt werden.

Die Verfahrensschritte 12 und 13 markieren eine erste Phase, in der der Zuspannwunsch erkannt und der an der Radbremse montierte Bremsmotor eingeschaltet wird. In Phase I wird gemäß Verfahrensschritt 12 eine Schätzung von Motorparametern durchgeführt, insbesondere der Widerstände im Motor- bzw. den Zuleitungen zum Motor, woraus der Motor-Ersatzwiderstand $R_{est}$ berechnet wird. Im Verfahrensschritt 13 wird auf der Grundlage von Strom- und Spannungsmessungen der Steuergerät-Ersatzwiderstand $R_{EZ}$ ermittelt. Auch die in Fig. 2 dargestellten Strom- und Spannungsverläufe $i_{Mot}$ bzw. $U_{Mot}$ fallen in die Phase I.

Hieran schließt sich die Phase II an, die die Leerlaufphase markiert, in der sich ein Leerlaufstrom, eine Leerlaufspannung und eine Leerlaufdrehzahl einstellen. Die Klemmkraft, welche über den elektrischen Bremsmotor aufzubringen ist, beträgt in dieser Phase weiterhin null. In Phase II fallen gemäß Verfahrensschritt 14 die Ermittlung des Leerlaufstroms $i_{idle}$ sowie gemäß Verfahrensschritt 15 die Ermittlung der Leerlaufspannung $U_{idle}$ durch Messung.

In der nächsten Phase III erfolgt der Klemmkraftaufbau. Zu Beginn der Phase III wird in einem Berechnungsblock mit den Verfahrensschritten 16, 17 und 18 zunächst eine Schätzung des maximalen Motorstroms $i_{Mot,max}$ (Verfahrensschritt 16) und anschließend in Verfahrensschritt 17 eine Schätzung der maximal erreichbaren Klemmkraft $F_{N,max}$ sowie in Verfahrensschritt 18 eine Schätzung des erforderlichen Motorstroms $i_{Mot,Ziel}$ für das Erreichen einer Zielklemmkraft $F_{N,Ziel}$ durchgeführt. Anschließend wird in einem Entscheidungsblock gemäß Verfahrensschritt 19 abgefragt, ob eine Unterstützung über die Zusatzbremsvorrichtung erforderlich ist. Sofern dies der Fall ist, wird der Ja-Verzweigung ("Y") folgend zum Verfahrensschritt 20 fortgefahren, in welchem die Druckunterstützung über die hydraulisch ausgebildete Zusatzbremsvorrichtung bereitgestellt wird. Andernfalls reicht die über den elektrischen Bremsmotor erzielbare Klemmkraft aus und es wird der Nein-Verzweigung ("N") folgend zum Verfahrensschritt 21 fortgefahren, in welchem ein elektromechanisches Zuspannen durch Betätigen des elektrischen Bremsmotors erfolgt.

**Patentansprüche**

1. Verfahren zum Einstellen der von einer Feststellbremse ausgeübten Klemmkraft ($F_N$), die von einer elektromotorischen Bremsvorrichtung, welche einen elektrischen Bremsmotor (2) und Stromversorgungs- und Steuereinheiten (3, 4) umfasst, und bedarfsweise von einer Zusatzbremsvorrichtung aufgebracht wird, **dadurch gekennzeichnet, dass** ein Gesamtwiderstand ($R_{ges}$) in der elektromotorischen Bremsvorrichtung aus der Summe des Motor-Ersatzwiderstands ($R_{est}$) und eines Steuergerät-Ersatzwiderstands ($R_{EZ}$) ermittelt wird, der den Widerstand in den Stromversorgungs- und Steuereinheiten (3, 4) des Bremsmotors (2) bezeichnet, wobei der Steuergerät-Ersatzwiderstand ($R_{EZ}$) aus Kenngrößen der Bremsvorrichtung ermittelt wird, und dass der Gesamtwiderstand ($R_{ges}$) der Ermittlung der maximal erzeugbaren Klemmkraft ($F_{N,max}$) und/oder der Ermittlung des für eine Zielklemmkraft ($F_{N,Ziel}$) erforderlichen Motorstroms ($i_{Mot,Ziel}$) zugrunde gelegt wird, wobei für den Fall, dass die maximal erzeugbare Klemmkraft ($F_{N,max}$) einen zugeordneten Schwellenwert unterschreitet bzw. der für die Zielklemmkraft ($F_{N,Ziel}$) erforderliche Motorstrom ($i_{Mot,Ziel}$) einen zugeordneten Schwellenwert überschreitet, über die Zusatzbremsvorrichtung eine Zusatzbremskraft aufgebracht wird.

2. Verfahren nach Anspruch 1, **dadurch gekennzeichnet, dass** der Steuergerät-Ersatzwiderstand ($R_{EZ}$) aus einer Strom- und Spannungsmessung ($i_{St,m}$, $U_{St,m}$) in der Bremsvorrichtung ermittelt wird.

3. Verfahren nach Anspruch 1 oder 2, **dadurch gekennzeichnet, dass** die Strom- und Spannungsmessung zur Ermittlung des Steuergerät-Ersatzwiderstands ($R_{EZ}$) zwischen dem Bremsmotor (2) und den mit dem Bremsmotor elektrisch verbundenen Stromversorgungs- und Steuereinheiten (3, 4) durchgeführt wird.

4. Verfahren nach einem der Ansprüche 1 bis 3, **dadurch gekennzeichnet, dass** die Stromversorgungs- und Steuereinheiten eine Batterie (4) und ein Steuergerät (3) umfassen und die Widerstände ($R_1$, $R_{21}$, $R_{22}$, $R_{31}$, $R_{32}$) in der Batterie (4), dem Steuergerät (3) und den verbindenden Stromleitungen bestimmt werden.

5. Verfahren nach einem der Ansprüche 1 bis 4, **dadurch gekennzeichnet, dass** ein oberer Strom-Schwellenwert ($i_{th1}$) und ein unterer Strom-Schwellenwert ($i_{th2}$) zur Markierung eines Messbereichs für die Ermittlung des Steuergerät-Ersatzwiderstands ($R_{EZ}$) berücksichtigt werden.

**6.** Verfahren nach Anspruch 5, **dadurch gekennzeichnet, dass** der obere und der untere Strom-Schwellenwert ($i_{th1}$, $i_{th2}$) einen zumindest annähernd geradlinigen Stromverlauf begrenzen.

**7.** Verfahren nach Anspruch 5 oder 6, **dadurch gekennzeichnet, dass** der untere Strom-Schwellenwert ($i_{th2}$) zumindest annähernd 4 A und der obere Strom-Schwellenwert ($i_{th1}$) zumindest annähernd 8 A beträgt.

**8.** Verfahren nach einem der Ansprüche 1 bis 7, **dadurch gekennzeichnet, dass** die Leerlaufspannung ($U_{idle}$) ermittelt und der Berechnung des maximal möglichen Motorstroms ($i_{Mot,max}$) zugrunde gelegt wird.

**9.** Verfahren nach einem der Ansprüche 1 bis 8, **dadurch gekennzeichnet, dass** die Strom- und Spannungsmessung zur Ermittlung des Steuergerät-Ersatzwiderstands ($R_{EZ}$) während des Einschaltvorgangs durchgeführt wird.

**10.** Regel- bzw. Steuergerät zur Durchführung des Verfahrens nach einem der Ansprüche 1 bis 9.

**11.** Feststellbremse in einem Fahrzeug mit einem Regel- bzw. Steuergerät nach Anspruch 10.

**12.** Feststellbremse nach Anspruch 11, **dadurch gekennzeichnet, dass** die Zusatzbremsvorrichtung als hydraulische Bremsvorrichtung ausgeführt ist.

**Claims**

**1.** Method for adjusting the clamping force ($F_N$) which is applied by a parking brake and which is provided by an electric-motor brake device which comprises an electric brake motor (2) and power supply and control devices (3, 4) and, if necessary, by an additional brake device, **characterized in that** a total resistance ($R_{tot}$) in the electric-motor brake device is determined from the sum of the motor equivalent resistance (Rest) and a control device equivalent resistance ($R_{EZ}$) which denotes the resistance in the power supply and control devices (3, 4) of the brake motor (2), wherein the control device equivalent resistance ($R_{EZ}$) is determined from characteristic variables of the brake device, and **in that** the total resistance ($R_{tot}$) is based on the determination of the maximum clamping force ($F_{N,max}$) which can be generated and/or the determination of the motor current ($i_{mot,Target}$) which is necessary for a target clamping force ($F_{N,Target}$), wherein in the event of the maximum clamping force ($F_{N,max}$) which can be generated undershooting an assigned threshold value or the motor current ($i_{mot,Target}$) which is necessary for the target clamping force ($F_{N,Target}$) exceeding an assigned threshold value, an additional braking force is provided by means of the additional brake device.

**2.** Method according to Claim 1, **characterized in that** the control device equivalent resistance ($R_{EZ}$) is determined from a current measurement and voltage measurement ($i_{St,m}$, $U_{St,m}$) in the brake device.

**3.** Method according to Claim 1 or 2, **characterized in that** the current measurement and voltage measurement for determining the control device equivalent resistance ($R_{EZ}$) is carried out between the brake motor (2) and the power supply and control devices (3, 4) which are electrically connected to the brake motor.

**4.** Method according to one of Claims 1 to 3, **characterized in that** the power supply and control devices comprise a battery (4) and a control device (3), and the resistances ($R_1$, $R_{21}$, $R_{22}$, $R_{31}$, $R_{32}$) in the battery (4), the control device (3) and the connecting power lines are determined.

**5.** Method according to one of Claims 1 to 4, **characterized in that** an upper current threshold value ($i_{th1}$) and a lower current threshold value ($i_{th2}$) for marking a measuring range are taken into account in the determination of the control device equivalent resistance ($R_{EZ}$).

**6.** Method according to Claim 5, **characterized in that** the upper and lower current threshold values ($i_{th1}$, $i_{th2}$) bound an at least approximately linear current profile.

**7.** Method according to Claim 5 or 6, **characterized in that** the lower current threshold value ($i_{th2}$) is at least approximately 4 A, and the upper current threshold value ($i_{th1}$) is at least approximately 8 A.

**8.** Method according to one of Claims 1 to 7, **characterized in that** the open circuit voltage ($U_{idle}$) is determined and is used as the basis for the calculation of the maximum possible motor current ($i_{mot,max}$).

9. Method according to one of Claims 1 to 8, **characterized in that** the current measurement and voltage measurement are carried out in order to determine the control device equivalent resistance ($R_{EZ}$) during the switch-on process.

10. Closed-loop and/or open-loop control device for carrying out the method according to one of Claims 1 to 9.

11. Parking brake in a vehicle, having a closed-loop and/or open-loop control device according to Claim 10.

12. Parking brake according to Claim 11, **characterized in that** the additional brake device is embodied as a hydraulic brake device.

**Revendications**

1. Procédé d'ajustement de la force de serrage ($F_N$) exercée par un frein de stationnement, qui est appliquée par un dispositif de freinage à moteur électrique comprenant un moteur de frein électrique (2) et des unités de commande et d'alimentation en courant (3, 4), et au besoin par un dispositif de frein supplémentaire, **caractérisé en ce qu'**une résistance totale ($R_{ges}$) dans le dispositif de freinage à moteur électrique est déterminée à partir de la somme de la résistance équivalente du moteur ($R_{est}$) et d'une résistance équivalente d'un appareil de commande ($R_{EZ}$), laquelle désigne la résistance dans les unités de commande et d'alimentation en courant (3, 4) du moteur de freinage (2), la résistance équivalente d'un appareil de commande ($R_{EZ}$) étant déterminée à partir de grandeurs caractéristiques du dispositif de freinage, et **en ce que** la résistance totale ($R_{ges}$) est prise pour base de la détermination de la force de serrage maximale pouvant être générée ($F_{N,max}$) et/ou de la détermination du courant moteur ($i_{Mot,Ziel}$) nécessaire pour une force de serrage cible ($F_{N,Ziel}$), une force de freinage supplémentaire étant appliquée par le biais du dispositif de freinage supplémentaire au cas où la force de serrage maximale pouvant être générée ($F_{N,max}$) passe en dessous d'une valeur seuil associée ou que le courant moteur ($i_{Mot,Ziel}$) nécessaire pour la force de serrage cible ($F_{N,Ziel}$) dépasse une valeur seuil associée.

2. Procédé selon la revendication 1, **caractérisé en ce que** la résistance équivalente d'un appareil de commande ($R_{EZ}$) est déterminée à partir d'une mesure du courant et de la tension ($i_{st,m}$, $U_{St,m}$) dans le dispositif de freinage.

3. Procédé selon la revendication 1 ou 2, **caractérisé en ce que** la mesure du courant et de la tension est effectuée pour déterminer la résistance équivalente d'un appareil de commande ($R_{EZ}$) entre le moteur de frein (2) et les unités de commande et d'alimentation en courant (3, 4) connectées électriquement au moteur de frein.

4. Procédé selon l'une quelconque des revendications 1 à 3, **caractérisé en ce que** les unités de commande et d'alimentation en courant comprennent une batterie (4) et un appareil de commande (3), et les résistances ($R_1$, $R_{21}$, $R_{22}$, $R_{31}$, $R_{32}$) dans la batterie (4), l'appareil de commande (3) et les conduites de connexion électriques sont déterminées.

5. Procédé selon l'une quelconque des revendications 1 à 4, **caractérisé en ce qu'**une valeur seuil de courant supérieure ($i_{th1}$) et une valeur seuil de courant inférieure ($i_{th2}$) sont prises en compte pour marquer une plage de mesure pour la détermination de la résistance équivalente de l'appareil de commande ($R_{EZ}$).

6. Procédé selon la revendication 5, **caractérisé en ce que** la valeur seuil de courant supérieure ($i_{th1}$) et la valeur seuil de courant inférieure ($i_{th2}$) limitent une coure de courant au moins approximativement linéaire.

7. Procédé selon la revendication 5 ou 6, **caractérisé en ce que** la valeur seuil de courant inférieure ($i_{th2}$) vaut au moins approximativement 4 A et la valeur seuil de courant supérieure ($i_{th1}$) vaut au moins approximativement 8 A.

8. Procédé selon l'une quelconque des revendications 1 à 7, **caractérisé en ce que** la tension de marche à vide ($U_{idle}$) est déterminée et est prise pour base pour le calcul du courant moteur maximal possible ($i_{Mot,max}$).

9. Procédé selon l'une quelconque des revendications 1 à 8, **caractérisé en ce que** la mesure du courant et de la tension est effectuée pendant l'opération d'enclenchement pour déterminer la résistance équivalente de l'appareil de commande ($R_{EZ}$).

10. Appareil de régulation et de commande pour mettre en oeuvre le procédé selon l'une quelconque des revendications 1 à 9.

**11.** Frein de stationnement dans un véhicule comprenant un appareil de régulation et de commande selon la revendication 10.

**12.** Frein de stationnement selon la revendication 11, **caractérisé en ce que** le dispositif de freinage supplémentaire est réalisé sous forme de dispositif de freinage hydraulique.

Fig. 1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006011546 A1